# EUROPEAN PATENT SPECIFICATION

(11) **EP 3 850 165 B1**
(45) Date of publication and mention of the grant of the patent: **20.11.2024**
(21) Application number: 19860089.2
(22) Date of filing: 02.09.2019
(51) Int. Cl.: E04B 1/04, E04B 1/41, E04B 1/61, E04C 5/16, B28B 23/00, E04B 1/16, E04B 2/68, E04B 2/84, E04C 2/04, E04C 2/06, E04C 2/24, E04C 2/34, E04C 2/38, E04C 2/40, E04C 2/52, E04C 2/00, F16B 7/18

(54) **A CONNECTION FOR CONNECTING PRECAST WALL PANELS**
VERBINDUNG ZUM VERBINDEN VON VORGEFERTIGTEN WANDPLATTEN
ATTACHE DE LIAISON DE PANNEAUX MURAUX PRÉFABRIQUÉS

(30) Priority: 14.09.2018 AU 2018903481
(43) Date of publication of application: 21.07.2021
(73) Proprietor: NXT Building System Pty Ltd., Canning Vale WA 6155 (AU)
(72) Inventor: LIM, Matakii, Canning Vale WA 6155 (AU)
(74) Representative: Harrison IP Limited
(86) International application number: PCT/AU2019/050926
(87) International publication number: WO 2020/051628

(56) References cited:
- EP-B1- 3 009 575
- EP-B1- 3 009 575
- WO-A1-2017/137800
- US-A- 3 230 683
- US-A- 5 309 691
- US-A1- 2017 022 699
- US-A1- 2017 022 699

## Description

### Technical Field

The present invention relates to a connection for connecting precast wall panels, such as precast concrete wall panels. The present invention further relates to a non-structural wall.

### Background

The process of erecting a building structure is typically a costly and cumbersome exercise. To simplify this process, prefabricated building structures have been developed. Prefabricated building structures are building structures that include components that are manufactured off-site. Prior to the process of erecting the building structure, the components are taken to a building site. The components are typically made in a factory and shipped to the building site. At the building site, the components are assembled together to erect the building structure. However, with conventional prefabricated building structures, there may still be a lot of on-site manufacturing and wet work involved to erect the building structure and make the building structure structurally sound.

The process of assembling the components of a conventional prefabricated building structure on-site typically are a cumbersome process and requires skilled labour as well as specialised machinery. This increases the cost for erecting the building structure.

Precast wall panels are conventionally connected using different types of anchors or connections, such as bolted connections, welded connections and dowel/anchor bolt connections.
An example of a connection suitable for connecting adjoining precast wall panels is known from document US 2017/022699 A1.

It would be advantageous if at least an embodiment of the present invention provided a connection for precast wall panels that improves or simplifies a process of installing the wall panels, or at least provided a working alternative to conventional connections.

Throughout the specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

The invention is a connection for connecting adjoining precast wall panels according to claim 1.

The alignment element may comprise an external thread for engaging with a cavity of the first and/or second connection body. The external thread is typically located at an end portion of the alignment element. The cavity of the first and/or second connection body may comprise a corresponding internal thread. In one specific embodiment, the cavity of each connection body comprises an internal thread so that the alignment element can engage with either of first and second connection bodies. This provides more flexibility when the precast wall panels are positioned to be connected.

The connection is configured such that when the adjoining wall panels are connected, a space is provided between the adjoining wall panels. This has the particular advantage of allowing vibrations of the wall panels. Even more so, a sealing material may be inserted into the space. In one particular embodiment, a length of the alignment element defines a size of the space provided between the adjoining wall panels. Specifically, the cavity of each connection body may comprise a shoulder portion for engaging with end portions of the alignment element. A person skilled in the art will appreciate that a size of the space between the adjoining wall panels may depend on at least a position of the shoulder portion of each connection body and a length of the alignment element.

The alignment element may further comprise an external structure for engaging with a tool, such as a wrench or a spanner, to fasten the alignment element to the first or second connection body.

In one embodiment, the connection may be configured such that a space is formed between the connecting bar and the alignment element when the connecting bar extends through the alignment channel. For example, the alignment channel may have a diameter that is larger than a diameter of the connecting bar. The formed space within the alignment channel may be filled with a setting material, such as grout. Filling the formed space within the alignment channel with a setting material may improve the strength of the connection.

The cavities of the first and second connection bodies may each have a diameter that is of proximate size as the diameter of the alignment channel.

Forming a space between the connecting bar and the alignment channel may provide additional advantages. In particular, a certain degree of tolerance may be provided for positioning the precast wall panels next to one another.

In one embodiment, the connection may be configured such that the alignment element protects the connecting bar when the connecting bar extends between the adjoining wall panels. Furthermore, the connection may be configured such that the alignment element seals a space within the first and second connection body and the alignment body, for example, for inserting a setting material. In this way, setting material inserted into the space can be confined to the connection.

The connecting bar may have an external thread extending along the entire connecting bar. This provides the advantage that setting material inserted in the space between the connecting bar and the alignment channel and/or the cavities of the connection bodies has a larger surface area to set against. Thus, a stronger connection between the wall panels may be provided.

Each fastener may comprise a nut and the connection may be configured such that when the nut engages with the external thread of the connecting bar, the body of the nut pushes against the respective connection body to apply a force to the connecting bar. The fastener may further comprise a further nut configured to secure the nut on the connecting bar.

The connection may be configured as a straight connection to connect adjoining precast wall panels to form a straight wall. In this case, the first and second connection bodies are configured as straight connection bodies. In this case, the first and second connection bodies may be substantially identical. Furthermore, the cavity of each straight connection body may extend substantially parallel to a panel face of the wall panel.

Alternatively, the connection may be configured as a corner connection to connect adjoining precast wall panels to form a corner. In this case, one of the first and second connection bodies is configured as a corner connection body. The cavity of the corner connection body may extend substantially perpendicular to a panel face of the respective wall panel. Thus, a length of the cavity of the corner connection body may be equal or shorter than a thickness of the respective precast wall panel.

Each connection body may comprise a plurality of legs for positioning the connection body in a casting mould when the wall panel is cast. The plurality of legs may be adjustable in length such that a position of the connection body can be adjusted. In this regard, each leg may comprise a nut head for engaging with a tool, such as a wrench or a spanner.

For a straight connection body, the plurality of legs may extend in a direction that is substantially perpendicular to the cavity of the connection body. For a corner connection body, the plurality of legs may extend in a direction that is substantially parallel to the cavity of the connection body. The corner connection body may further comprise a flange from which the plurality of legs extend. For example, the corner connection may comprise a plate having an aperture for receiving the corner connection body. The corner connection body may comprise shoulders for positioning the plate. The plate may be made of steel.

In a specific embodiment, the connection may further comprise at least one grout tube that is connected to a cavity of the first and/or second connection body. A grout tube in this context has the function of providing a specified inlet for inserting a setting material into a space within the connection. The connection may be configured such that an end of the grout tube terminates at the panel face of a wall panel. For example, the grout tube may comprise an elbow such that an end of the grout tube terminates at the panel face of the wall panel. This is particularly advantageous for a straight connection body.

Each connection body may comprise an opening to a side wall of the cavity within the connection body. The connection may be configured such that the opening is substantially flush with a panel face of the wall panel. The connection body may further comprise a cap for closing the opening during the casting process of the wall panel. In this way, the setting material of the wall panel cannot enter the cavity of the connection body.

The opening may be arranged such that access to the external thread of the connecting bar can be provided for the fasteners.

Each connection body may be made of steel.

Embodiments of the present invention relate to a structural wall comprising a plurality of precast wall panels, wherein adjoining wall panels are connected via the connection as described above. Each precast wall panel may be connected to an adjoining precast wall panel using more than one connection.

Embodiments of the present invention relate to a method of connecting adjoining precast wall panels using the connection as described above.

Embodiments of the present invention relate to a method of connecting adjoining precast wall panels according to claim 12.

The step of providing first and second precast walls panels may comprise positioning the first and second connection bodies within a casting mould to cast the respective wall panels.

Embodiments of the present invention relate to a non-structural wall having a surface area, the non-structural wall comprising:
at least two panel layers arranged to extend substantially parallel to one another and enclosing a space extending along and between the two panel layers, each panel layer comprising a series of adjoining wall panels; and
a frame structure holding the plurality of wall panels to form the non-structural wall, the frame comprising four frame elements provided on each side of the non-structural wall;
wherein each frame element comprises first and second recesses, each configured to receive an edge of a wall panel, and a spacer component defining the space between the at least two panel layers, and wherein the non-structural wall is configured such that no additional frame element extends through a centre portion of the wall.

In an embodiment, a first frame element comprises first and second longitudinal angles and a C-channel beam having a longitudinal web and first and second legs extending from the web, wherein the frame element is configured such that the first recess is formed by a space between the first longitudinal angle and the first leg of the C-channel and the first recess is formed by a space between the second longitudinal angle and the second leg of the C-channel. The frame element is configured such that a width of the longitudinal web defines a size of the space between the panel layers.

In an embodiment, a second frame element comprises first and second C-channel beams and a spacer web connecting the first and second C-channel beams, wherein the first C-channel beam defines the first recess and the second C-channel beam defines the second recess. The first and second C-channel beams and the spacer web may be integrally formed.

In one embodiment, the frame comprises two first frame elements and two second frame elements. The two first frame elements may be arranged at opposite sides of the non-structural wall.

In one embodiment, the frame comprises one first frame element and three second frame elements. In an alternative embodiment, the frame comprises three first frame elements and one second frame element.

The non-structural wall panel may comprise insulating material, such as glass wool, located within the space between the two panels.

In an embodiment, the non-structural wall is configured such that adjoining wall panels of the series of wall panels are connected via an abutting joint. The abutting joint may be filled with a glue. The non-structural wall may be configured such that each wall panel of the first panel layer substantially faces a wall panel of the second panel layer. Alternatively, the series of wall panels of the first panel layer may be offset relative to the series of wall panels of the second panel layer. This example may improve fire rating characteristics of the non-structural wall.

Each wall panel may comprise a plurality of layers. In one specific example, each wall panel comprises a fibre cement layer, a sound shield layer and a fire shield layer.

### Brief Description of Drawings

Certain exemplary embodiments of the invention will now be described with reference to the accompanying drawings in which:
Figure 1 is an isometric representation of a straight connection in accordance with an embodiment of the present invention, the connection being shown within two connected precast wall panels forming a straight wall;
Figure 2 is a schematic side view of the straight connection of Figure 1;
Figure 3 is a schematic representation of a first connection body of the straight connection shown in Figures 1 and 2;
Figure 3A is a schematic representation of an alternative first connection body of the straight connection shown in Figures 1 and 2;
Figure 4 is a schematic representation of a second connection body of the straight connection shown in Figures 1 and 2;
Figure 5 is a schematic representation of an alignment element of the straight connection of Figures 1 and 2;
Figure 6 shows a top view of the connection of Figures 1 and 2 within the connected wall panels, the top view illustrating in particular the flow of the grout within the connection;
Figure 7 is an isometric representation of a corner connection not in accordance with the present invention but useful to understand possible embodiments of the present invention, the connection being shown within two connected precast wall panels former a corner;
Figure 8 is a side view of the corner connection of Figure 7;
Figure 9 is an isometric representation of a first connection body of the corner connection shown in Figures 7 and 8;
Figures 10 shows an isometric representation of the first connection body of Figure 9 within the wall panel;
Figure 11 shows a top view of the corner connection of Figures 7 and 8 within the connected wall panels, the top view illustrating in particular the flow of the grout within the connection;
Figure 12 shows an isometric representation of a non-structural wall not in accordance with the present invention but useful to understand possible embodiments of the present invention;
Figure 13 shows a cross sectional view of the non-structural wall of Figure 12;
Figure 14 shows a cross sectional view of a first frame element of a non-structural wall; and
Figure 15 shows a cross sectional view of a second frame element.

### Description of Embodiments

Some embodiments of the present invention generally relate to a connection for connecting adjoining precast wall panels. For example, the precast wall panels may be structural wall panels made of concrete. The connection may be configured as a straight connection to connect two precast wall panels forming a straight wall, or as a corner connection to form a corner between two wall panels.

Precast wall panels are typically connected to each other upon installation using various types of anchors and connections. The primary purpose of these connections is to fix precast panels in position relative to one another and ultimately transfer load to the supporting structure for strength and stability. In the following, an exemplary connection between two precast wall panels will be described in accordance with an embodiment of the present invention. This exemplary connection has the advantage that the precast wall panels can be connected to each other without the requirement for welding. In this way, installation speed of the wall panels at the building site can be improved and the need for welders to be present on site may be eliminated or at least reduced. Moreover, when the connection is installed between two adjacent wall panels, a significant portion of the connection will be located within the adjoining wall panels and not visible from the outside. As such, the aesthetics of the connected wall panels may be improved.

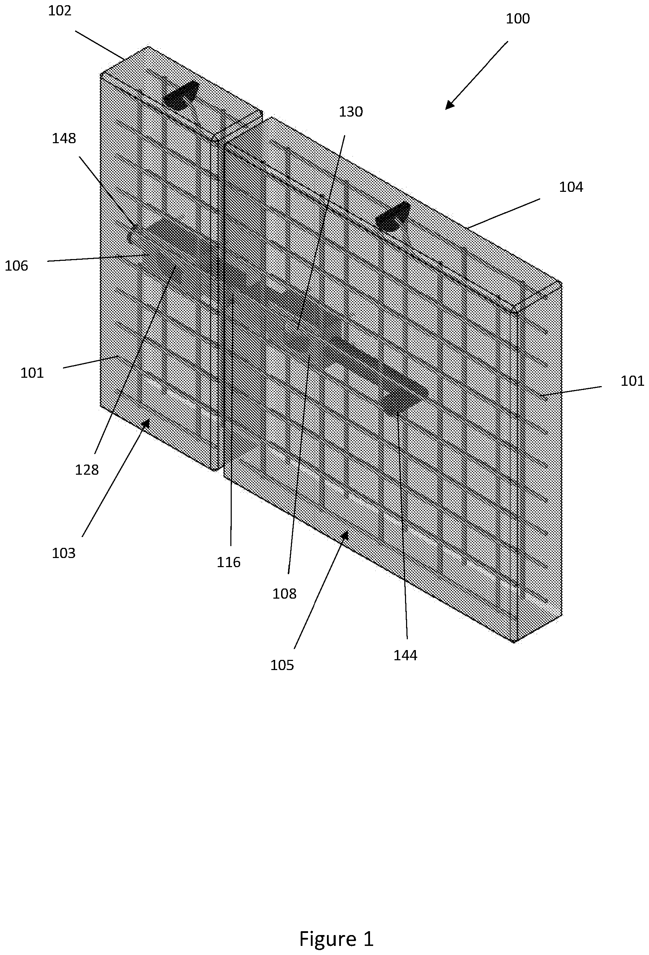

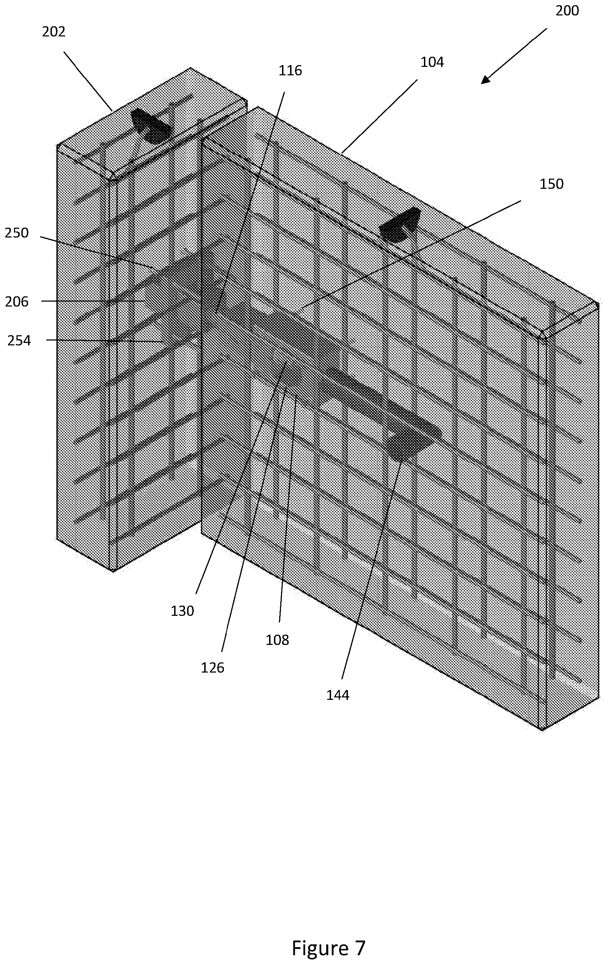

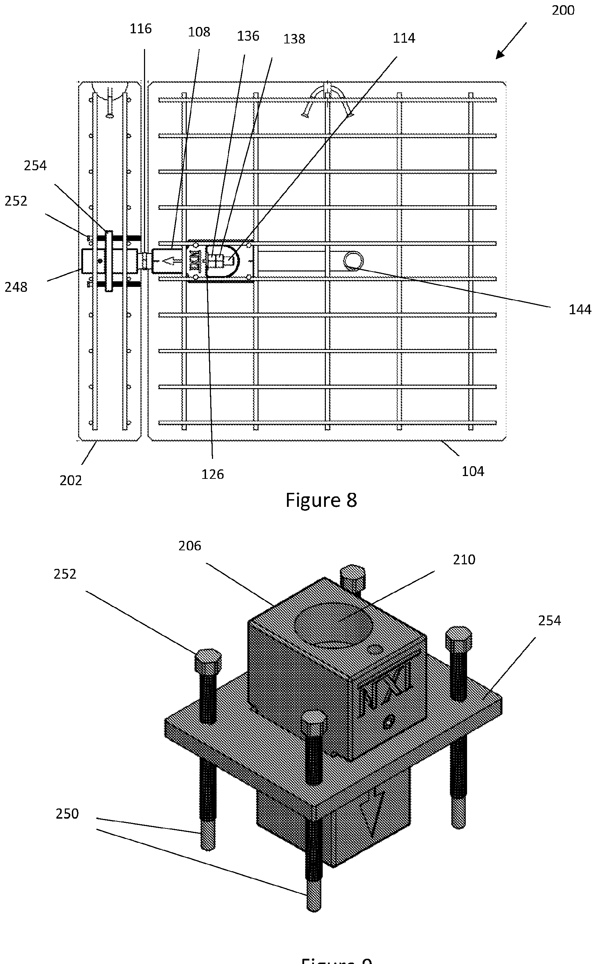

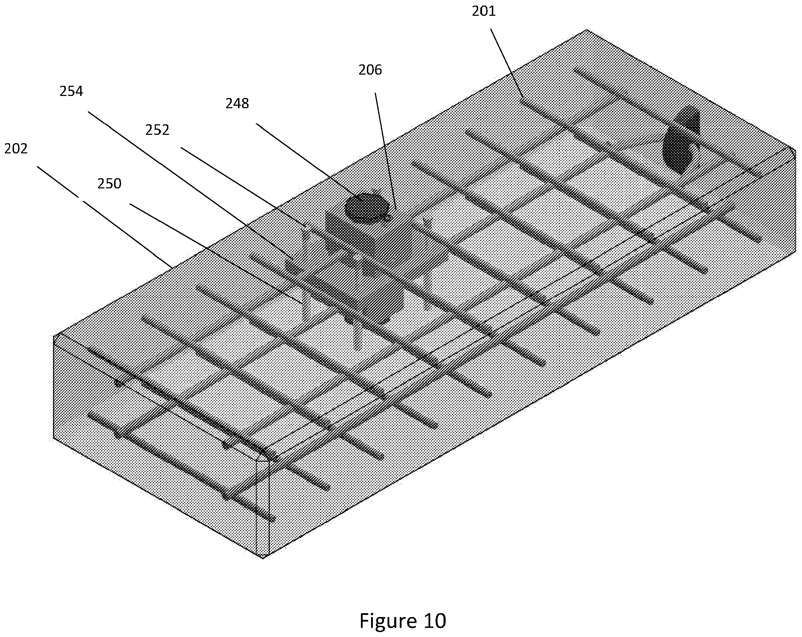

Referring now to the accompanying drawings, a particular example of a straight connection 100 for connecting adjoining precast wall panels will be described with reference to Figures 1 to 6. An example of a corner connection 200 not in accordance with the present invention but useful to understand possible embodiments of the present invention will be described with reference to Figures 7 to 10.

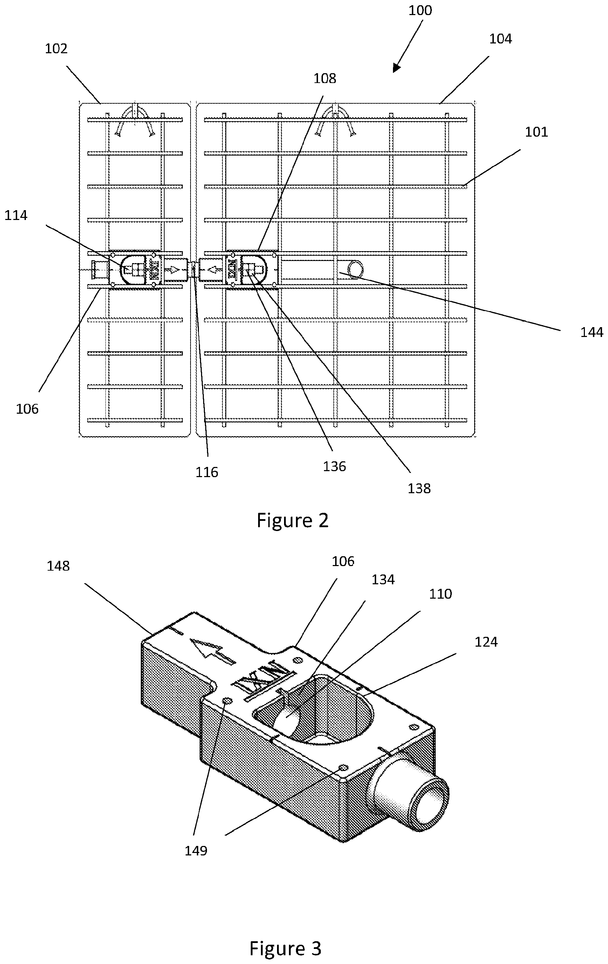

Referring initially to Figures 1 and 2, there is shown a straight connection 100 for connecting a first precast wall panel 102 with a precast second wall panel 104. The precast wall panels 102, 104 may, for example, be made of concrete and form a structural wall of a building structure. Each wall panel 102, 104 has a panel face 103, 105 that refers to the largest surface area of the wall panel 102, 104. Thus, to form a straight wall, the straight connection 100 connects the first and second wall panels 102, 104 so that the panel faces 103, 105 are aligned.

This particular embodiment of connection has been designed to resist forces imposed on the connections in accordance with the requirements of AS 3600 and AS 3850 in Australia or their equivalent in other areas.

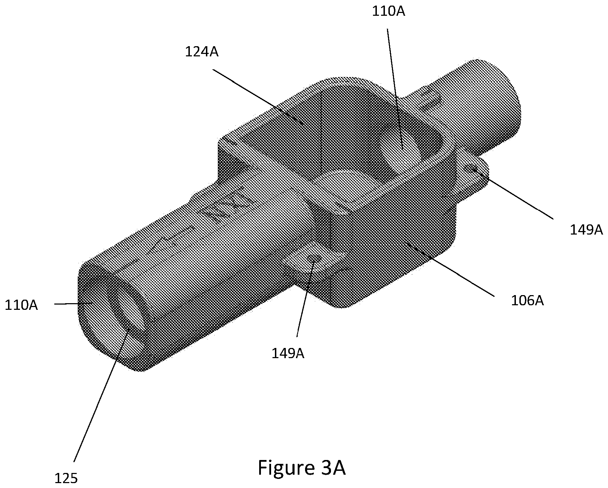

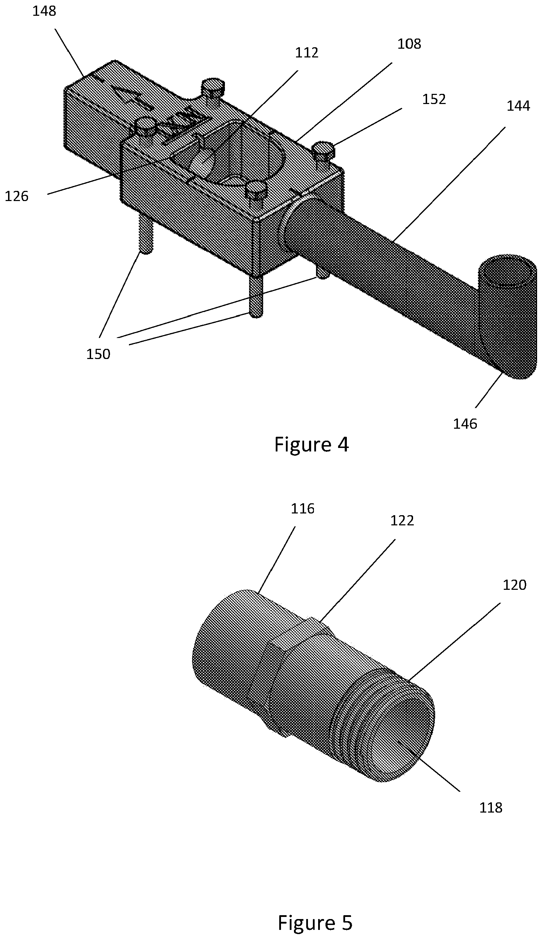

The straight connection 100 comprises a first connection body 106 that is positioned within the first precast wall panel 102. In this example, the first connection body 106 was placed in a casting mould (not shown) when the first wall panel 102 was cast. A detailed view of the first connection body 106 outside of the wall panel 102 is shown in Figure 3. The straight connection 100 further comprises a second connection body 108 that is positioned within the second precast wall panel 104. A detailed view of the second connection body 108 outside of the wall panel 104 is shown in Figure 4. An alternative example of the first connection body 106A is shown in Figure 3A. The first connection body 106A functions in the same way as the first connection body 106, however requires less overall material than the first connection body 106.

Both connection bodies 106 (106A), 108 have cavities 110 (110A), 112 that extend through an entire length of the connection bodies 106 (106A), 108. In this example, the cavities 106 (106A), 108 are in the form of tunnels wherein one end of the tunnels terminates at a side face of the wall panel 102, 104 that face each other when the wall panels 102, 104 are connected. A person skilled in the art will appreciate that the cavities may have any suitable shape and length. For example, the cavities may not extend through the entire length of the connection bodies.

The connection bodies 106 (106A), 108 within the wall panels 102, 104 are connected by virtue of a connecting bar 114 and an alignment element 116. In this example, the connecting bar 114 is in the form of a threaded steel rod, where end portions of the steel rod comprise external threads. However, a person skilled in the art will appreciate that the external thread may extend along an entire length of the connecting bar. This configuration may simplify the manufacturing process and has some additional advantages as will be described below with regard to a setting material inserted into the connection.

An example of the alignment element 116 is shown in detail in Figure 5. The alignment element 116 has an overall cylindrical shape and comprises an alignment channel 118 for receiving the connecting bar 114. The alignment element 116 also has an external thread 120 located at one end of the alignment element 116 to attach to one of the connection bodies 106 (106A), 108. In this regard, at least one of the cavities 110, 112 of the connection bodies 106 (106A), 108 has an internal thread for engaging with the alignment element 116. In this particular example, both cavities 110, 112 of the connection bodies 106, 108 have an internal thread such that the alignment element 116 can be attached to either of the connection bodies 106, 108. This provides improved flexibility when the precast wall panels 102, 104 are positioned to be connected. In this example, the alignment element 116 further has an external structure 122 to be manipulated by a tool, such as a spanner or a wrench, to fasten the alignment element 116 to one of the first and second connection bodies 106 (106A), 108.

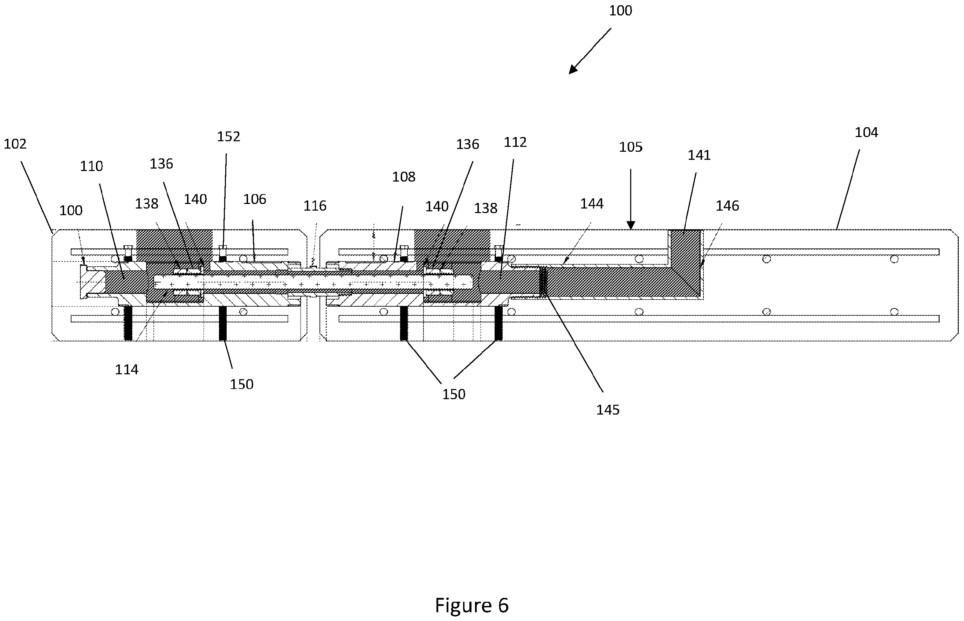

As described above, when the wall panels 102, 104 are positioned to be connected, the alignment element 116 attaches to one of the connection bodies 106 (106A), 108. A detailed view of the wall panels 102, 104 being connected by the connection 100 is illustrated in Figures 6. In this example, the alignment element 116 is attached to the second connection body 104. The connecting bar 114 is initially positioned within the cavity 112 of the second connection body 104. It should be noted that in this particular example, the cavities 110 (110A), 112 of both connection bodies 102, 104 are dimensioned to fully accommodate the connecting bar 114 to provide flexibility when the precast wall panels 102, 104 are connected. However, it will be appreciated that only one connection body may be sized to fully accommodate the connecting bar or that each connection body 106 (106A), 108 may be dimensioned to accommodate only a portion of the connecting bar 114, such as half a length of the connecting bar 114.

In order to connected the precast wall panels 102, 104, the first wall panel 102 is positioned next to the second wall panel 104 such that opposite ends of the alignment element 116 are positioned within the respective cavities 110, 112 of the connection bodies 106, 108. In this regard, each cavity 110, 112 may comprise a seat or shoulder portion for seating an end portion of the alignment element 116 to stop further movement of the alignment element 116 into the cavity 110, 112. An exemplary shoulder portion 125 of the first connection body 106A is shown in Figure 3A.

As shown in the Figures, in this example the alignment element 116 further functions as a spacer element between the adjoining precast wall panels 102, 104. In this regard, a person skilled in the art will appreciate that a dimension of a space between the connected precast wall panels 102, 104 depends on at least a position of the seat or shoulder portion within the cavities 110 (110A), 112, such as shoulder portion 125 of the first connection body 106A, and a length of the alignment element 116. Providing a relatively small space between connected precast wall panels 102, 104 has the particular advantage that the so formed wall can allow for vibrations of the wall panels 102, 104. Even more so, a sealing material may be provided in the space between the connected wall panels 102, 104.

Once the cavities 110 (110A), 112 of the connection bodies 106 (106A), 108 are aligned by virtue of the alignment element 116, the connecting bar 114 is positioned to extend through the alignment channel 118 of the alignment element 116 and into both cavities 110 (110A), 112. Specifically, the connecting bar 114 is positioned such that the external thread 115 at both ends of the connecting bar 114 can be accessed through openings 124 (124A), 126 for respective fasteners 128, 130.

For simplicity, in the following only the opening 126 of cavity 112 of the second connection body 108 will be described. The opening 126 is located within a side wall of the connection body 108 and arranged such that the opening 126 is substantially flush with the panel face 105 of the wall panel 104. The opening 126 has the function of providing access to the cavity 112 of the connection body 108, for example for the fasteners 130 to engage with the connecting bar 114. The connection body 108 further comprises a cap 132 that is configured to seal the opening 126 when the wall panel 108 is cast.

As particularly shown in Figure 4, the cavity 112 of the second connection body 108 comprises a shoulder portion providing a flat surface 134 that is configured to provide a resistance against the fastener 130 when the fastener 130 engages with the connecting bar 114. In this way, the fastener 130 can apply a force to the connecting bar 114. In this particular example, each fastener 128, 130 comprises a first nut 136, a second nut 138, such as a jam nut, and a washer 140. The first nut 136 is configured to engage with the external thread 115 of the connecting bar 114 and fastened against the flat surface 134 of the connection body 108 via the washer 140 to apply a force to the connecting bar 114. The second nut 138 is configured to lock the first nut 136 in place. However, a person skilled in the art will appreciate that any suitable type of fasteners is envisaged that can engage with the external thread portions of the connecting bar 114.

Thus, when the connecting bar 114 extends through the alignment element 116 and into the cavities 110 (110A), 112 of the first and second connection bodies 106 (106A), 108 within the precast wall panels 102, 104, the first and second fasteners 128, 130 can be inserted into the cavities 110 (110A), 112 through the respective openings 124 (124A), 126 to engage with the respective outer threads 115 at the end portions of the connecting bar 114. In this way, opposing forces are applied to the ends of the connecting bar 114 thereby securely connecting the adjoining wall panels 102, 104.

Referring now in particular to Figure 6, a cross section of the straight connection 100 is shown. In this particular example, the straight connection 100 is configured such that a space 142 is formed between the connecting bar 114 and the alignment channel 118. In addition, a space 142 is formed between the connecting bar 114 and the cavities 110, 112 of the first and second connection bodies 106, 108. The straight connection 100 is configured such that the space 142 defines a flow channel for a setting material, such as grout 141 as shown as shaded area in Figure 6. Filling the formed space 142 with the setting material, such as grout, may improve the strength of the connection 100. It will be appreciated by a person skilled in the art that filling the space 142 with a setting material such as grout is optional and may not be required to securely connect the precast wall panels 102, 104.

In this particular example, the space 142 is formed by providing a connecting bar 114 that has a smaller diameter than a diameter of the alignment channel 118 and the cavities 110, 112. A further advantage of this configuration is that a certain degree of tolerance is provided for aligning the first and second cavities 110, 112 when the precast wall panels 102, 104 are positioned to be connected. This tolerance may further be advantageous if one or both of the wall panels 102, 104 move relative to each other, for example, after the building structure has been erected.

The alignment element 116 in this particular embodiment also has the function of sealing the formed space 142. In this way, if a setting material, such as grout, is inserted into the connection 100, the setting material can be substantially confined to the space 142 within the connection 100. Thus, by providing the alignment element 116, no or only a limited amount of setting material may move outside of the connection 100.

The straight connection 100 in this example further comprises a further flow channel, such as grout tube 144 that attaches to the first and/or second connection body 106, 108. In this particular example, the grout tube 144 attaches to the second connection body 108 by virtue of a thread 145. However, a person skilled in the art will appreciate that other suitable attachments are envisaged, including but not limited to a sliding connection that may be secured using an adhesive such as tape. The grout tube 144 is arranged such that an end of the grout tube 144 terminates at a panel face of a wall panel 104. In the embodiment shown in Figure 6, the grout tube 144 attaches to the second connection body 108 to be in fluid communication with the cavity 112 and comprises an elbow 146 such that an end of the grout tube 144 terminates at the second panel face 105. A protective cap (not shown) may be attached to the end of the grout tube 114 when the wall panels 102, 104 are cast.

In one example (not shown), the connecting bar may have an external thread that extends along the entire length of the connecting bar. This provides the advantage that setting material inserted in the space 142 has a larger surface area to set against. Thus, a stronger connection between the precast wall panels 102, 104 may be provided.

As mentioned above, each connection body 106 (106A), 108 is positioned within a respective precast wall panel 102, 104. In this regard, the connection body 106 (106A), 108 is placed into a casting mould (not shown) together with any components of the wall panel, such as the reinforcing structure 101. In order to avoid that any casting material protrudes into the cavities 110, 112 of the connection bodies 106 (106A), 108, protective caps, such as cap 132 or cap 148, attach to the connection bodies 106 (106A), 108 during the casting process.

In order to position the connection bodies 110, 112 in the casting mould at the required position and thus within the cast wall panels 102, 104, each connection body 106 (106A), 108 comprises a plurality of apertures 149 (149A) for receiving a respective plurality of legs 150. In this particular embodiment, each connection body 106 (106A), 108 comprises four legs 150 that are height adjustable. Each leg 150 comprises a nut head 152 for engaging with a tool, such as a wrench or a spanner to adjust a length of the legs 150. The legs 150 of the connection body 106 (106A), 108 extend in a direction substantially perpendicular to the cavity 110 (110A), 112 of the connection body 106 (106A), 108.

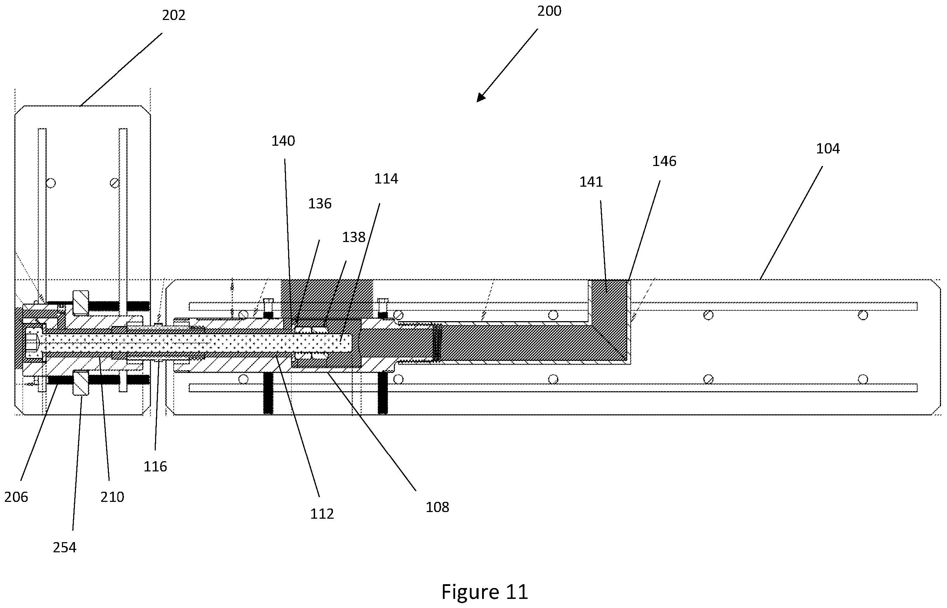

Referring now to Figures 7 to 11, there is shown a connection 200 that is configured as a corner connection. In other words, the corner connection is configured to connect a first precast wall panel 202 with a second precast wall panel 104 to form a corner. As shown in particular in Figure 7, the corner connection 200 comprises a corner connection body 206 and a straight connection body, such as second connection body 108 of the straight connection 100 described with reference to Figures 1 to 6. Features of the straight connection body of connection 200 are analogous to the features described for the connection 100 and like numerals are used to indicate like components.

The corner connection 200 also comprises a connecting bar, in this example connecting bar 114, and an alignment element, in this example the alignment element 116.

Similar to the straight connection body 108, the corner connection body 206 also comprises a cavity 210 for receiving a portion of the connecting bar 114. The cavity 210 of the corner connection body 206 extends substantially perpendicular to the panel face 203 of the wall panel 202 and due to the arrangement of the wall panel 202, it will be appreciated that a length of the cavity 210 is limited by a thickness of the precast wall panel 202. Thus, the cavity 210 is typically shorter than cavity 112 of the straight connection body 108.

The corner connection body 206 also has an opening 224 to provide access to the cavity 210, for example for fasteners to engage with the external thread of the connecting bar 114. Due to the position of the corner connection body 206 within the precast wall panel 202, the opening 224 is arranged at an end portion of the corner connection body 206 terminating at a side face of the wall panel 202 instead of the panel face 203. The opening 224 can be closed using a cap 248 such that during the casting process of the wall panel, no casting material protrudes into the cavity 210 of the corner connection body 206. Similarly, the opposite end of the cavity 210 can be closed with a cap (not shown).

The corner connection body 206 comprises a plurality of legs 250 for positioning the corner connection body 206 in a casting mould (not shown) when the wall panel 202 is cast. The plurality of legs 250 are adjustable in length to adjust the position of the corner connection body 206 relative to the wall panel 202. In this regard, the legs 250 have nut heads 252 for engaging with a tool.

The plurality of legs 250 extend in a direction that is substantially parallel to the cavity of the corner connection body 206. In this way, the corner connection body 206 can be positioned within the wall panel 202 such that when the wall panel 202 and the wall panel 104 are positioned next to one another, the cavity 210 of the corner connection body 206 aligns with the cavity 112 of the straight connection body 108.

In this particular connection, the corner connection body 206 further comprises a flange enclosing the corner connection body 206. The flange is configured to hold the plurality of legs 250 and is in this example in the form of a plate, such as a steel plate 254. The steel plate 254 comprises a central aperture for receiving the corner connection body 206. In this regard, the corner connection body 206 comprises shoulders to secure the steel plate 254 in relative position. The flange further provides the advantage that a surface area of the corner connection body 206 can be increased that engages with surrounding casting material, such as concrete. Thus, stability of the corner connection body 206 within the wall panel 202 can be improved.

### Non-structural wall

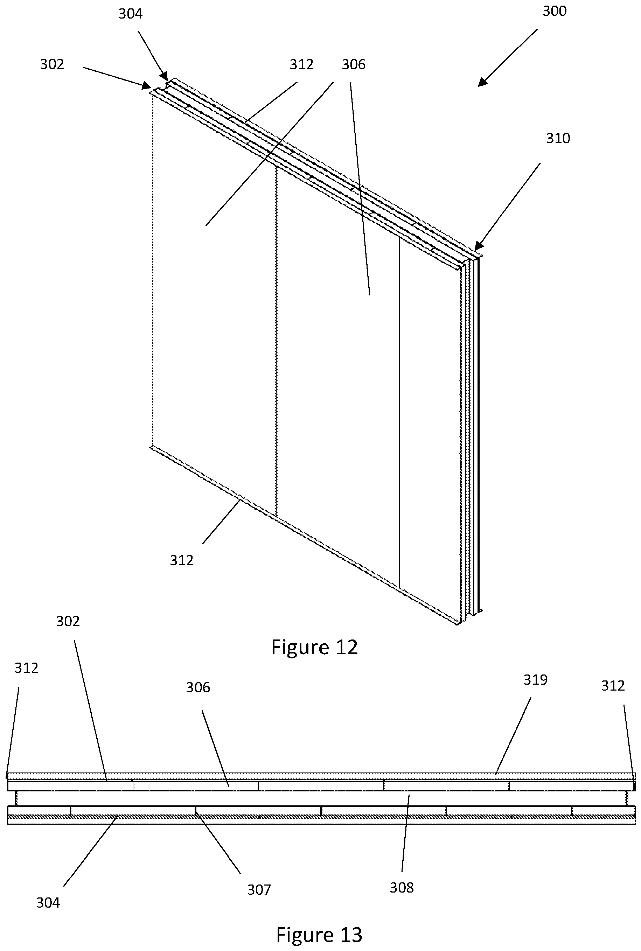

Referring now to Figures 12 to 15, there is shown a non-structural wall 300, which may be used with the present invention. In contrast to the pre-cast wall panels described above, a non-structural wall typically forms internal walls within a building structure.

The non-structural wall panel 300 comprises a first panel layer 302 and a second panel layer 304 that are arranged to extend substantially parallel to one another. This is shown in particular in Figure 13. Each of the first and second panel layers 302, 304 comprises a series of wall panels 306. In this example, when the non-structural wall 300 is assembled, adjoining wall panels 306 of the first and second panel layers 302, 304 are connected by virtue of an abutting joint 307. Thus, adjoining wall panels 306 abut edge to edge. The abutting joint 307 may be filled with a suitable adhesive or glue to strengthen the non-structural wall 300. It will be appreciated that other suitable joints between adjoining wall panels 306 are envisaged. However, an abutting joint has the particular advantage that manufacturing of the wall panels 306 can be simplified. Even more so, an exemplary sample of the non-structural wall panel 300 with the simplified abutting joints has been thoroughly tested and fulfilled the necessary fire and strength rating.

Specifically, according to an Australian standard testing environment, the exemplary sample of the non-structural wall 300 was tested for wind loading, fire resistance and acoustic insulation. The testing results were the following:
Wind loading for internal pressures of loads up to 1.78kPa.
Fire Resistance Level of -/120/120
Acoustic Insulation Test: Rw= 53dB , Rw + Ctr = 50 dB

The first and second panel layers 302, 304 are arranged to enclose a space 308 along and between the two panel layers 302, 304. The space 308 may be empty, i.e. filled with air, but is typically filled with an insulating material, such as glass fibre or wool.

As particularly shown in Figure 13, the wall panels 306 of the first and second panel layers 302, 304 are arranged to offset each other. In other words, an abutting joint 307 of the first panel layer 302 faces a centre portion of a wall panel 306 of the second panel layer 304. A person skilled in the art will appreciate that alternatively each wall panel of the first panel layer 302 may substantially face a corresponding wall panel of the second panel layer 304.

In this example, each wall panel 306 comprises a plurality of layers, such as laminated layers. In one specific example, the wall panel 306 may comprise outer layers and inner layers. The outer layers may be arranged to protect the inner layers and may, for example, be fibre cement layers. In one specific example, each fibre cement layer may have a thickness of 4.5 mm. The inner layers of the wall panel 306 may comprise a sound shield layer and a fire shield layer. The sound shield layer may, for example, be plasterboard with a thickness of 13 mm. The fire shield layer may comprise calcium silicate. An example of a fire shield layer may be Promatec 100. The fire shield layer may have a thickness of 20 mm. The described dimensions of the layers are for illustrative purposes only and a person skilled in the art will appreciate that the thickness of each layer may vary depending on the desired strength and fire resistance characteristics of the non-structural wall 300.

The non-structural wall 300 further comprises a frame structure 310 configured to hold the plurality of wall panels 306 to form the non-structural wall 300. The frame structure 310 comprises a frame element provided on each side of the non-structural wall 300. Thus, the frame structure 310 comprises four frame elements 312. Each frame element 312 generally comprises first and second recesses 314, 316, each configured to receive an edge of a wall panel 306, and a spacer 318 component defining the space 306 between the two panel layers 302, 304. In this regard, the non-structural wall 300 may be configured to provide a snug fit between the frame elements 312 and the wall panels 306. A person skilled in the art will appreciate that dimensions of the frame elements 312 are typically selected based on a thickness of the wall panels 306 and the requirements of the space 306 between the two panel layers 302, 304. The wall panels 306 are typically held only by the frame structure 310 enclosing the panel layers 302, 304. As such, no additional frame elements are required that extend through a centre portion of the wall 300. Thus, the amount of material needed for assembling the wall 300 can be further reduced and simplified.

Furthermore, a total thickness of this exemplary non-structural wall 300 is 175 mm which is thinner than conventional non-structural walls whilst achieving substantially the same strength and fire resistance requirements.

The non-structural wall 300 may further comprise outer layers 319, such as cladding layers. The outer layers 319 may be arranged to cover a portion of the frame elements 312. Exemplary outer layers 319 may be plasterboard such as Gyprock or CSR surround.

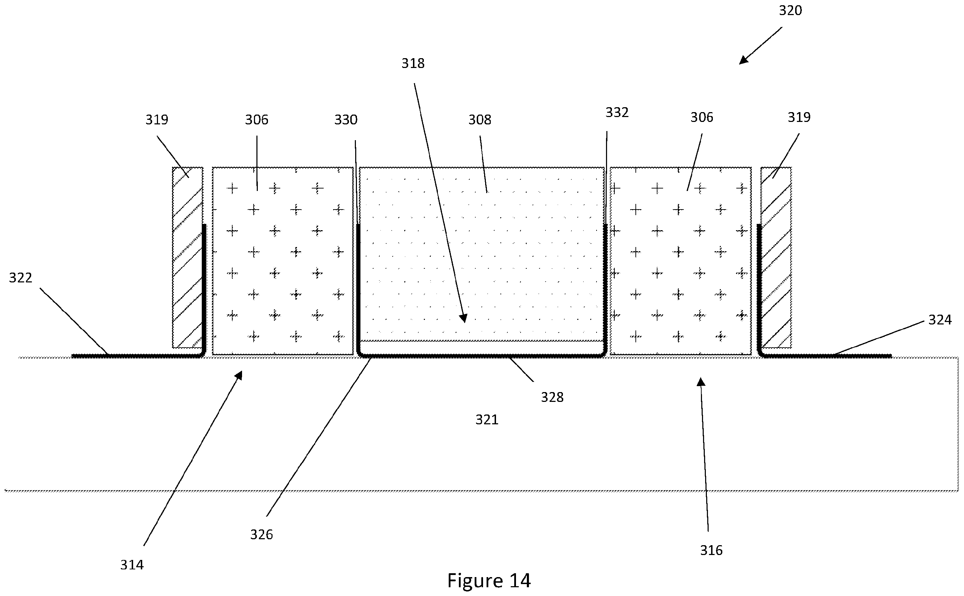

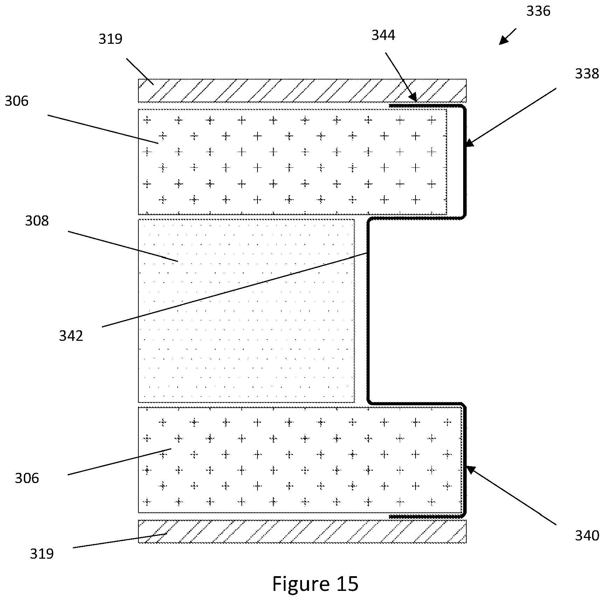

Referring now to Figures 14 and 15, specific examples of two exemplary frame elements 312 will be described. A first frame element 320 of the frame structure 310 is shown in Figure 14. The first frame element 320 comprises a frame body 321, first and second longitudinal angles 322, 324 and a C-channel beam 326 having a longitudinal web 328 and first and second legs 330, 332 extending from the web 328. The first frame element 320 is configured such that a first recess 314 for receiving an edge of the wall panel 306 is formed by a space between the first longitudinal angle 322 and the first leg 330 of the C-channel beam 326. A second recess 316 is formed by a space between the second longitudinal angle 324 and the second leg 332 of the C-channel beam 326. Suitable fasteners (not shown) may be used to secure the angles 322, 324 and the C-channel beam 326 to the frame body 321 and the edges of the wall panel 306.

A width of the longitudinal web 328 of the C-channel beam 326 therefore defines a width of the space between the panel layers 302, 304. The frame structure 310 may comprise four first frame elements 320 arranged to form the non-structural wall 300.

Referring now to Figure 15, a second frame element 336 of the frame structure 310 is shown. The second frame element 336 comprises a first C-channel beam 338, a second C-channel beam 340 and a spacer web 342 connecting the first and second C-channel beams 338, 340. In this particular example, the first and second C-channel beams 338, 340 and the spacer web 342 are integrally formed and therefore form a W-shaped channel 344. The second frame element 336 may also comprise a frame body (not shown) and the W-shaped channel 344 may be attached to the frame body using suitable fasteners (not shown).

In one specific example, the frame structure 310 comprises two first frame elements 320 and two second frame elements 336. The two first frame elements 320 may be arranged opposite of each other. However, it will be appreciated that the two first frame elements 320 may alternatively be next to one another. In another specific example, the frame structure 310 comprises one first frame element 320 and three second frame elements 336. In yet another specific example, the frame structure 310 comprises three first frame elements 320 and one second frame element 336.

It will be appreciated by persons skilled in the art that numerous variations and/or modifications may be made to the invention as long as they fall under the scope of the claims.

| | | | | | |
|---|---|---|---|---|---|
| **List of numerals** | | 134 | flat surface | 300 | non-structural wall |
| | | 136 | first nut | 302 | first panel layer |
| 100 | straight connection | 138 | second nut | 304 | second panel layer |
| 101 | Reinforcement structure | 140 | washer | 306 | wall panel |
| | | 141 | grout | 307 | joint |
| 102 | first wall panel | 142 | space | 308 | space |
| 103 | first wall panel face | 144 | grout tube | 310 | frame structure |
| 104 | second wall panel | 145 | thread | 312 | frame element |
| 105 | second wall panel face | 146 | elbow | 314 | first recess |
| 106 | first connection body | 148 | cap | 316 | second recess |
| 108 | second connection body | 149 | apertures | 318 | spacer element |
| | | 150 | Legs | 319 | cladding |
| 110 | cavity of first connection body | 152 | Heads of legs | 320 | first frame element |
| | | 200 | corner connection | 321 | frame body |
| 112 | cavity of second | 202 | first wall panel | 322 | first angle |
| | connection body | 203 | first wall panel face | 324 | second angle |
| 114 | connecting bar | 206 | corner connection body | 326 | C-channel beam |
| 115 | external thread? | 210 | cavity of corner connection body | 328 | web |
| 116 | alignment element | | | 330 | first leg |
| 118 | alignment channel | 224 | opening | 332 | second leg |
| 120 | external thread (alignment element) | 228 | fastener | 336 | second frame element |
| | | 234 | flat surface | 338 | first C-channel beam |
| 122 | external structure | 248 | cap | 340 | second C-channel beam |
| 124, 126 | opening | 250 | legs | 342 | spacer web |
| 125 | shoulder portion | 252 | heads of legs | 344 | W-shaped channel |
| 128, 130 | fasteners | 254 | plate | | |
| 132 | cap | 256 | aux flow channel | | |

## Claims

1. A connection (100, 200) for connecting adjoining precast wall panels (102, 104, 202), the connection (100, 200) comprising:
a connecting bar (114) comprising an external thread (115) at each end portion of the connecting bar (114);
first and second connection bodies (106, 108, 206), each comprising a cavity (110, 112, 210) for receiving at least a portion of the connecting bar (114) and configured to be positioned within a respective precast wall panel (102, 104, 202) such that when the precast wall panels (102, 104, 202) are connected the cavity (110, 210) of the first connection body (106, 206) substantially aligns with the cavity (112) of the second connection body (108);
first and second fasteners (128, 130, 228) configured to engage with the respective external threads (115) of the connecting bar (114);
**characterised in that** the connection comprises an alignment element (116) for aligning the cavities (110, 112, 210) of the first and second connection bodies (106, 108, 206), the alignment element (116) comprising an alignment channel (118) for receiving the connecting bar (114);
and **in that** the connection (100, 200) is configured such that when the connecting bar (114) extends through the alignment channel (118) of the alignment element (116) and into the cavities (110, 112, 210) of the first and second connection bodies (106, 108, 206) positioned within the precast wall panels (102, 104, 202), the first and second fasteners (128, 130, 228) can engage with the respective external threads (115) of the connecting bar (114) to apply opposing forces to the connecting bar (114) thereby connecting the adjoining wall panels (102, 104, 202), and a sealed space (142) is formed between the connecting bar (114) and the alignment channel (118) of the alignment element (116) that defines a flow channel between the cavities (110, 112) for receiving a setting material.

2. The connection (100, 200) of claim 1 wherein the alignment element (116) comprises an external thread (120) for engaging with an internal thread of the first or second connection body (106, 108, 206).

3. The connection (100, 200) of claim 1 or 2, wherein the connecting bar (114) has an external thread (115) extending along the entire length of the connecting bar (114).

4. The connection (100, 200) of any one of claims 1 to 3, wherein each connection body (106, 108, 206) comprises a plurality of legs (150, 250) for positioning the connection body (106, 108, 206) in a casting mould when the wall panel (102, 104, 202) is cast.

5. The connection (100, 200) of claim 4, wherein each of the plurality of legs (150, 250) is adjustable in length such that a position of the connection body (106, 108, 206) can be adjusted.

6. The connection (100, 200) of any one of claims 1 to 5 and adjoining precast wall panels, wherein the connection (100, 200) is configured as a straight connection (100) to connect adjoining precast wall panels (102, 104) to form a straight wall, or a corner connection (200) to connect adjoining precast wall panels (202, 104) to form a corner,
wherein when the connection is configured as a straight connection (100), each of the first and second connection bodies are configured as straight connection bodies (106, 108), the cavity (110, 112) of each straight connection body (106, 108) extending substantially parallel to the panel face (103, 105) of the wall panel (102, 104), and
wherein when the connection is configured as a corner connection (200), the first connection body is configured as a corner connection body (206) and the second connection body is configured as a straight connection body (108), a cavity (210) of the corner connection body (206) extending substantially perpendicular to the panel face (203) of the respective wall panel (202).

7. The connection (100, 200) and adjoining precast wall panels of claim 6, wherein a length of the cavity (210) of the corner connection body (206) is equal or shorter than a thickness of the respective precast wall panel (202).

8. The connection (100, 200) and adjoining precast wall panels of claim 6 or 7, wherein when the connection body (106, 108, 206) comprises a plurality of legs (150, 250) for positioning the connection body (106, 108, 206), the plurality of legs (150) of the straight connection body (106, 108) extend in a direction that is substantially perpendicular to the cavity (110, 112) of the connection body (106, 108) and the plurality of legs (250) of the corner connection body (206) extend in a direction that is substantially parallel to the cavity (210) of the connection body (206).

9. The connection (100, 200) or connection and adjoining precast wall panels of any one of claims 1 to 8, further comprising at least one grout tube (144) that is configured to connect a cavity (110, 112, 210) of the first and/or second connection body (106, 108, 206) to a panel face (103, 105, 203) of the wall panel (102, 104, 202).

10. The connection (100, 200) or connection and adjoining precast wall panels of any one of claims 1 to 9, wherein each connection body (106, 108, 206) comprises an opening (124, 126, 224) to a side wall of the cavity (110, 112, 210) within the connection body (106, 108, 206), the opening (124, 126, 224) being arranged to provide access for the fasteners (128, 130) to the external thread (115) of the connecting bar (114).

11. The connection (100, 200) or connection and adjoining precast wall panels of claim 10, wherein the connection (100, 200) is configured such that the opening (124, 126, 224) is substantially flush with a panel face (103, 105, 203) of the wall panel (102, 104, 202).

12. A method of connecting adjoining precast wall panels (102, 104, 202) using the connection or connection and adjoining precast wall panels of any claims 1 to 11, the method comprising:
providing first and second precast wall panels (102, 104, 202) with respective first and second connection bodies (106, 108, 206) of the connection of any one of claims 1 to 11 configured such that when the precast wall panels (102, 104, 202) are connected, a cavity (110, 210) of the first connection body (106) substantially aligns with a cavity (112) of the second connection body (108);
providing and attaching the alignment element (116) to the first connection body (106, 206) such that the cavity (110, 210) of the first connection body (106, 206) aligns with an alignment channel (118) of the alignment element (116);
providing and positioning a connecting bar (114) within at least the cavity (110, 210) of the first connection body (106, 206), the connecting bar (114) comprising an external thread (115) at each end portion of the connecting bar (114);
positioning the second wall panel (104) such that the respective cavities (110, 112, 210) of the first and second connection bodies (106, 108, 206) are aligned using the alignment element (116);
positioning the connecting bar (114) to extend through the alignment element (116) and into the cavities (110, 112, 210) of the first and second connection bodies (106, 108, 206);
engaging first and second fasteners (128, 130) with the respective external threads (115) of the connecting bar (114) to apply opposing forces to the connecting bar (114) thereby connecting the adjoining wall panels (102, 104, 202),
filling the space between the connecting bar (114) and the alignment member (116), and the first and second cavities (110, 112) of the respective first and second connection bodies (106, 108) with a setting material.

## Patentansprüche

1. Verbindung (100, 200) zum Verbinden von angrenzenden vorgefertigten Wandplatten (102, 104, 202), wobei die Verbindung (100, 200) umfasst:
eine Verbindungsstange (114), die an jedem Endabschnitt der Verbindungsstange (114) ein Außengewinde (115) umfasst;
erste und zweite Verbindungskörper (106, 108, 206), die jeweils einen Hohlraum (110, 112, 210) zum Aufnehmen mindestens eines Abschnitts der Verbindungsstange (114) umfassen und dazu konfiguriert sind, innerhalb einer jeweiligen vorgefertigten Wandplatte (102, 104, 202) so positioniert werden, dass, wenn die vorgefertigten Wandplatten (102, 104, 202) verbunden sind, der Hohlraum (110, 210) des ersten Verbindungskörpers (106, 206) im Wesentlichen mit dem Hohlraum (112) des zweiten Verbindungskörpers (108) ausgerichtet ist;
erste und zweite Befestigungselemente (128, 130, 228), die dazu konfiguriert sind, in die jeweiligen Außengewinde (115) der Verbindungsstange (114) einzugreifen;
**dadurch gekennzeichnet, dass** die Verbindung ein Ausrichtungselement (116) zum Ausrichten der Hohlräume (110, 112, 210) der ersten und zweiten Verbindungskörper (106, 108, 206) umfasst, wobei das Ausrichtungselement (116) einen Ausrichtungskanal (118) zum Aufnehmen der Verbindungsstange (114) umfasst;
und
dass die Verbindung (100, 200) so konfiguriert ist, dass, wenn sich die Verbindungsstange (114) durch den Ausrichtungskanal (118) des Ausrichtungselements (116) und in die Hohlräume (110, 112, 210) der ersten und zweiten Verbindungskörper (106, 108, 206) erstreckt, die innerhalb der vorgefertigten Wandplatten (102, 104, 202) positioniert sind, die ersten und zweiten Befestigungselemente (128, 130, 228) in die jeweiligen Außengewinde (115) der Verbindungsstange (114) eingreifen zu können, um entgegengesetzte Kräfte auf die Verbindungsstange (114) auszuüben und dadurch die angrenzenden Wandplatten (102, 104, 202) zu verbinden, und ein abgedichteter Raum (142) zwischen der Verbindungsstange (114) und dem Ausrichtungskanal (118) des Ausrichtungselements (116) gebildet wird, der einen Strömungskanal zwischen den Hohlräumen (110, 112) zur Aufnahme eines aushärtenden Materials definiert.

2. Verbindung (100, 200) nach Anspruch 1, wobei das Ausrichtungselement (116) ein Außengewinde (120) zum Eingreifen in ein Innengewinde des ersten oder zweiten Verbindungskörpers (106, 108, 206) umfasst.

3. Verbindung (100, 200) nach Anspruch 1 oder 2, wobei die Verbindungsstange (114) ein Außengewinde (115) aufweist, das sich über die gesamte Länge der Verbindungsstange (114) erstreckt.

4. Verbindung (100, 200) nach einem der Ansprüche 1 bis 3, wobei jeder Verbindungskörper (106, 108, 206) eine Vielzahl von Beinen (150, 250) zum Positionieren des Verbindungskörpers (106, 108, 206) in einer Gussform umfasst, wenn die Wandplatte (102, 104, 202) gegossen wird.

5. Verbindung (100, 200) nach Anspruch 4, wobei jedes der Vielzahl von Beinen (150, 250) in der Länge so einstellbar ist, dass eine Position des Verbindungskörpers (106, 108, 206) eingestellt werden kann.

6. Verbindung (100, 200) nach einem der Ansprüche 1 bis 5 und angrenzende vorgefertigte Wandplatten, wobei die Verbindung (100, 200) als eine gerade Verbindung (100) zum Verbinden angrenzender vorgefertigter Wandplatten (102, 104) zur Bildung einer geraden Wand oder als eine Eckverbindung (200) zum Verbinden angrenzender vorgefertigter Wandplatten (202, 104) zur Bildung einer Ecke konfiguriert ist,
wobei, wenn die Verbindung als eine gerade Verbindung (100) konfiguriert ist, jeder der ersten und zweiten Verbindungskörper als gerade Verbindungskörper (106, 108) konfiguriert ist, wobei sich der Hohlraum (110, 112) jedes geraden Verbindungskörpers (106, 108) im Wesentlichen parallel zur Plattenfläche (103, 105) der Wandplatte (102, 104) erstreckt, und
wobei, wenn die Verbindung als eine Eckverbindung (200) konfiguriert ist, der erste Verbindungskörper als ein Eckverbindungskörper (206) konfiguriert ist und der zweite Verbindungskörper als ein gerader Verbindungskörper (108) konfiguriert ist, wobei sich ein Hohlraum (210) des Eckverbindungskörpers (206) im Wesentlichen senkrecht zur Plattenfläche (203) der jeweiligen Wandplatte (202) erstreckt.

7. Verbindung (100, 200) und angrenzende vorgefertigte Wandplatten nach Anspruch 6, wobei eine Länge des Hohlraums (210) des Eckverbindungskörpers (206) gleich oder kürzer als eine Dicke der jeweiligen vorgefertigten Wandplatte (202) ist.

8. Verbindung (100, 200) und angrenzende vorgefertigte Wandplatten nach Anspruch 6 oder 7, wobei, wenn der Verbindungskörper (106,108, 206) eine Vielzahl von Beinen (150, 250) zum Positionieren des Verbindungskörpers (106, 108, 206) umfasst, sich die Vielzahl von Beinen (150) des geraden Verbindungskörpers (106, 108) in eine Richtung erstrecken, die im Wesentlichen senkrecht zu dem Hohlraum (110, 112) des Verbindungskörpers (106, 108) ist, und sich die Vielzahl von Beinen (250) des Eckverbindungskörpers (206) in eine Richtung erstrecken, die im Wesentlichen parallel zu dem Hohlraum (210) des Verbindungskörpers (206) ist.

9. Verbindung (100, 200) bzw. Verbindung und angrenzende vorgefertigte Wandplatten nach einem der Ansprüche 1 bis 8, ferner umfassend mindestens ein Mörtel-rohr (144), das dazu konfiguriert ist, einen Hohlraum (110, 112, 210) des ersten und/oder zweiten Verbindungskörpers (106, 108, 206) mit einer Plattenfläche (103, 105, 203) der Wandplatte (102, 104, 202) zu verbinden.

10. Verbindung (100, 200) bzw. Verbindung und angrenzende vorgefertigte Wandplatten nach einem der Ansprüche 1 bis 9, wobei jeder Verbindungskörper (106, 108, 206) eine Öffnung (124, 126, 224) zu einer Seitenwand des Hohlraums (110, 112, 210) innerhalb des Verbindungskörpers (106, 108, 206) umfasst, wobei die Öffnung (124, 126, 224) dazu angeordnet ist, den Befestigungselementen (128, 130) Zugang zum Außengewinde (115) der Verbindungsstange (114) bereitzustellen.

11. Verbindung (100, 200) bzw. Verbindung und angrenzende vorgefertigte Wandplatten nach Anspruch 10, wobei die Verbindung (100, 200) so konfiguriert ist,
dass die Öffnung (124, 126, 224) im Wesentlichen bündig mit einer Plattenfläche (103, 105, 203) der Wandplatte (102, 104, 202) ist.

12. Verfahren zum Verbinden von angrenzenden vorgefertigten Wandplatten (102, 104, 202) unter Verwendung der Verbindung bzw. Verbindung und angrenzender vorgefertigter Wandplatten nach einem der Ansprüche 1 bis 11, wobei das Verfahren umfasst:
Bereitstellen erster und zweiter vorgefertigter Wandplatten (102, 104, 202) mit jeweiligen ersten und zweiten Verbindungskörpern (106, 108, 206) der Verbindung nach einem der Ansprüche 1 bis 11, die so konfiguriert sind, dass, wenn die vorgefertigten Wandplatten (102, 104, 202) verbunden sind, ein Hohlraum (110, 210) des ersten Verbindungskörpers (106) im Wesentlichen mit einem Hohlraum (112) des zweiten Verbindungskörpers (108) ausgerichtet ist;
Bereitstellen und Befestigen des Ausrichtungselements (116) an dem ersten Verbindungskörper (106, 206) derart, dass der Hohlraum (110, 210) des ersten Verbindungskörpers (106, 206) mit einem Ausrichtungskanal (118) des Ausrichtungselements (116) ausgerichtet ist;
Bereitstellen und Positionieren einer Verbindungsstange (114) innerhalb zumindest des Hohlraums (110, 210) des ersten Verbindungskörpers (106, 206), wobei die Verbindungsstange (114) an jedem Endabschnitt der Verbindungsstange (114) ein Außengewinde (115) umfasst;
Positionieren der zweiten Wandplatte (104) derart, dass die jeweiligen Hohlräume (110, 112, 210) des ersten und zweiten Verbindungskörpers (106, 108, 206) unter Verwendung des Ausrichtungselements (116) ausgerichtet sind;
Positionieren der Verbindungsstange (114), um sich durch das Ausrichtungselement (116) und in die Hohlräume (110, 112, 210) des ersten und zweiten Verbindungskörpers (106, 108, 206) zu erstrecken;
Eingreifen erster und zweiter Befestigungselemente (128, 130) in die jeweiligen Außengewinde (115) der Verbindungsstange (114), um entgegengesetzte Kräfte auf die Verbindungsstange (114) auszuüben und dadurch die angrenzenden Wandplatten (102, 104, 202) zu verbinden,
Füllen des Raums zwischen der Verbindungsstange (114) und dem Ausrichtungselement (116) sowie der ersten und zweiten Hohlräume (110, 112) der jeweiligen ersten und zweiten Verbindungskörper (106, 108) mit einem aushärtenden Material.

## Revendications

1. Attache (100, 200) de liaison de panneaux muraux préfabriqués adjacents (102, 104, 202), l'attache (100, 200) comprenant :
une barre de liaison (114) comprenant un filetage externe (115) au niveau de chaque partie d'extrémité de la barre de liaison (114) ;
des premier et second corps d'attache (106, 108, 206), comprenant chacun une cavité (110, 112, 210) destinée à recevoir au moins une partie de la barre de liaison (114) et conçus pour être positionnés à l'intérieur d'un panneau mural préfabriqué respectif (102, 104 , 202) de sorte que lorsque les panneaux muraux préfabriqués (102, 104, 202) sont liés, la cavité (110, 210) du premier corps d'attache (106, 206) s'aligne sensiblement avec la cavité (112) du second corps d'attache (108) ;
des premier et second éléments de fixation (128, 130, 228) conçus pour venir en prise avec les filetages externes respectifs (115) de la barre de liaison (114) ;
**caractérisée en ce que** l'attache comprend
un élément d'alignement (116) destiné à aligner les cavités (110, 112, 210) des premier et second corps d'attache (106, 108, 206), l'élément d'alignement (116) comprenant un canal d'alignement (118) destiné à recevoir la barre de liaison (114) ; et
**en ce que** l'attache (100, 200) est conçue de sorte que lorsque la barre de liaison (114) s'étend à travers le canal d'alignement (118) de l'élément d'alignement (116) et dans les cavités (110, 112, 210) des premier et second corps d'attache (106, 108, 206) positionnés à l'intérieur des panneaux muraux préfabriqués (102, 104, 202), les premier et second éléments de fixation (128, 130, 228) peuvent se mettre en prise avec les filetages externes respectifs (115) de la barre de liaison (114) de manière à appliquer des forces opposées sur la barre de liaison (114), liant ainsi les panneaux muraux adjacents (102, 104, 202), et un espace étanche (142) est formé entre la barre de liaison (114) et le canal d'alignement (118) de l'élément d'alignement (116) qui définit un canal d'écoulement entre les cavités (110, 112) destiné à recevoir un matériau de prise.

2. Attache (100, 200) selon la revendication 1, ledit élément d'alignement (116) comprenant un filetage externe (120) destiné à se mettre en prise avec un filetage interne du premier ou du second corps d'attache (106, 108, 206).

3. Attache (100, 200) selon la revendication 1 ou 2, ladite barre de liaison (114) comportant un filetage externe (115) s'étendant sur toute la longueur de la barre de liaison (114).

4. Attache (100, 200) selon l'une quelconque des revendications 1 à 3, chaque corps d'attache (106, 108, 206) comprenant une pluralité de pattes (150, 250) destinées au positionnement du corps d'attache (106, 108, 206) dans un moule de coulée lorsque le panneau mural (102, 104, 202) est coulé.

5. Attache (100, 200) selon la revendication 4, chacune de la pluralité de pattes (150, 250) étant réglable en longueur de sorte que la position du corps d'attache (106, 108, 206) puisse être ajustée.

6. Attache (100, 200) selon l'une quelconque des revendications 1 à 5 et panneaux muraux préfabriqués adjacents, ladite attache (100, 200) étant conçue sous la forme d'une attache droite (100) destinée à lier des panneaux muraux préfabriqués adjacents (102, 104) de manière former un mur droit, ou une attache d'angle (200) destinée à lier des panneaux muraux préfabriqués adjacents (202, 104) de manière à former un coin,
lorsque l'attache est conçue sous la forme d'une attache droite (100), chacun des premier et second corps d'attache étant conçu sous la forme de corps d'attache droits (106, 108), la cavité (110, 112) de chaque corps d'attache droit (106, 108) s'étendant sensiblement parallèlement à la face de panneau (103, 105) du panneau mural (102, 104), et
lorsque l'attache est conçue sous la forme d'une attache d'angle (200), ledit premier corps d'attache étant conçu sous la forme d'un corps d'attache d'angle (206) et ledit second corps d'attache étant conçu sous la forme d'un corps d'attache droit (108), une cavité (210) du corps d'attache d'angle (206) s'étendant sensiblement perpendiculairement à la face de panneau (203) du panneau mural respectif (202).

7. Attache (100, 200) et panneaux muraux préfabriqués adjacents selon la revendication 6, la longueur de la cavité (210) du corps d'attache d'angle (206) étant inférieure ou égale à l'épaisseur du panneau mural préfabriqué respectif (202).

8. Attache (100, 200) et panneaux muraux préfabriqués adjacents selon la revendication 6 ou 7, lorsque le corps d'attache (106, 108, 206) comprend une pluralité de pattes (150, 250) destinée au positionnement du corps d'attache (106, 108, 206), ladite pluralité de pattes (150) du corps d'attache droit (106, 108) s'étendant suivant une direction qui est sensiblement perpendiculaire à la cavité (110, 112) du corps d'attache (106, 108) et ladite pluralité de pattes (250) du corps d'attache d'angle (206) s'étendant suivant une direction qui est sensiblement parallèle à la cavité (210) du corps d'attache (206).

9. Attache (100, 200) ou attache et panneaux muraux préfabriqués adjacents selon l'une quelconque des revendications 1 à 8, comprenant en outre au moins un tube de coulis (144) qui est conçu pour lier une cavité (110, 112, 210) du premier et/ou du second corps d'attache (106, 108, 206) à une face de panneau (103, 105, 203) du panneau mural (102, 104, 202).

10. Attache (100, 200) ou attache et panneaux muraux préfabriqués adjacents selon l'une quelconque des revendications 1 à 9, chaque corps d'attache (106, 108, 206) comprenant une ouverture (124, 126, 224) vers une paroi latérale de la cavité (110, 112, 210) à l'intérieur du corps d'attache (106, 108, 206), ladite ouverture (124, 126, 224) étant agencée de manière à permettre l'accès des éléments de fixation (128, 130) au filetage externe (115) de la barre de liaison (114).

11. Attache (100, 200) ou attache et panneaux muraux préfabriqués adjacents selon la revendication 10, ladite attache (100, 200) étant conçue de sorte que l'ouverture (124, 126, 224) affleure sensiblement une face de panneau (103, 105, 203) du panneau mural (102, 104, 202).

12. Procédé de liaison de panneaux muraux préfabriqués adjacents (102, 104, 202), utilisant l'attache ou l'attache et les panneaux muraux préfabriqués adjacents selon l'une quelconque des revendications 1 à 11, le procédé comprenant :
la fourniture des premier et second panneaux muraux préfabriqués (102, 104, 202) avec des premier et second corps d'attache respectifs (106, 108, 206) de l'attache selon l'une quelconque des revendications 1 à 11, conçus de sorte que lorsque les panneaux muraux préfabriqués (102, 104, 202) sont liés, une cavité (110, 210) du premier corps d'attache (106) s'aligne sensiblement avec une cavité (112) du second corps d'attache (108) ;
la fourniture et la fixation de l'élément d'alignement (116) au premier corps d'attache (106, 206) de sorte que la cavité (110, 210) du premier corps d'attache (106, 206) s'aligne avec un canal d'alignement (118) de l'élément d'alignement (116) ;
la fourniture et le positionnement d'une barre de liaison (114) à l'intérieur d'au moins la cavité (110, 210) du premier corps d'attache (106, 206), la barre de liaison (114) comprenant un filetage externe (115) au niveau de chaque partie d'extrémité de la barre de liaison (114) ;
le positionnement du second panneau mural (104) de sorte que les cavités respectives (110, 112, 210) des premier et second corps d'attache (106, 108, 206) soient alignées à l'aide de l'élément d'alignement (116) ;
le positionnement de la barre de liaison (114) de manière à ce qu'elle s'étende à travers l'élément d'alignement (116) et dans les cavités (110, 112, 210) des premier et second corps d'attache (106, 108, 206) ;
la mise en prise des premier et second éléments de fixation (128, 130) avec les filetages externes respectifs (115) de la barre de liaison (114) de manière à appliquer des forces opposées sur la barre de liaison (114), liant ainsi les panneaux muraux adjacents (102, 104, 202),
le remplissage de l'espace entre la barre de liaison (114) et l'élément d'alignement (116), et les première et seconde cavités (110, 112) des premier et second corps d'attache respectifs (106, 108) avec un matériau de prise.
